# EUROPEAN PATENT SPECIFICATION

(11) **EP 2 014 452 B1**
(45) Date of publication and mention of the grant of the patent: **18.05.2011**
(21) Application number: 08010324.5
(22) Date of filing: 06.06.2008
(51) Int. Cl.: B29D 30/38, B29D 30/16, B29D 30/30

(54) **Method for manufacturing a pneumatic tire.**
Herstellungsverfahren eines Luftreifens.
Procédé de fabrication d'un pneumatique.

(30) Priority: 08.06.2007 JP 2007153131
(43) Date of publication of application: 14.01.2009
(73) Proprietor: Sumitomo Rubber Industries, Ltd., Hyogo-ken (JP)
(72) Inventor: Sakamoto, Masayuki, Kobe-shi Hyogo-ken (JP); Kuroki, Takeshi, Kobe-shi Hyogo-ken (JP)
(74) Representative: Manitz, Finsterwald & Partner GbR

(56) References cited:
- EP-A- 0 928 702
- EP-A- 1 607 209
- EP-A- 1 787 791
- WO-A-03/061953

## Description

### Background of the invention

The present invention relates to a method according to the preamble of claim 1.

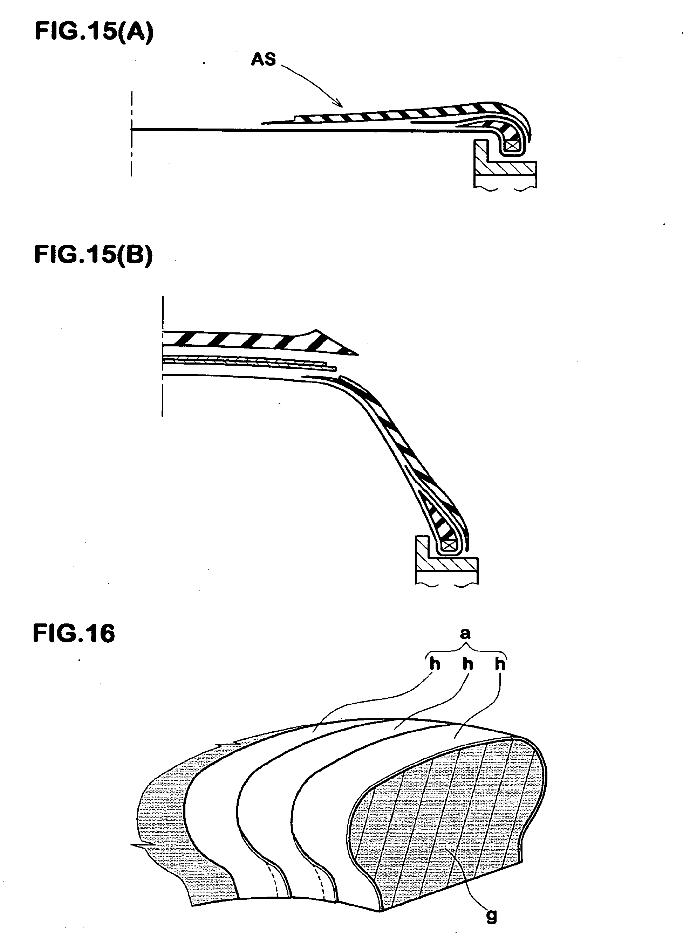

Heretofore, in the processes of manufacturing a pneumatic tire, the green tire, namely, unvulcanized tire is formed by the use of a tire building drum since such tire building drum is cylindrical, after some of the tire components including the carcass ply are wound or applied to the drum as shown in Fig. 15(A), the assembly (AS) is swelled as shown in Fig. 15(B) and the remaining tire components are disposed thereon to accomplish the formation of the green tire.

In recent years, on the other hand, in stead of such a cylindrical tire building drum, the use of a toroidal core having a horseshoe-shaped profile similar to the profile of the inner surface of the vulcanized tire has been proposed for example in the European patent application EP-0928702-A1. Tire components, e.g. inner liner rubber, carcass ply, tread rubber, sidewall rubber and the like are applied to and assembled around the toroidal core.

Since the toroidal core has a complex curved surface, gaps are liable to be formed between the applied tire components by nature. Further, in the case of such a toroidal core (g), as shown in Fig.16, a carcass ply (a) is formed by circumferentially arranging narrow strip pieces (h) in which carcass cords are embedded. This further increase the possibility of causing the gaps. If the gaps are remained in the finished tire as large air pockets, defects in the internal tire structure, deformation on the tire appearance and the like are liable to occur. Therefore, it is very important to discharge the air trapped between the applied tire components.

EP 1 607 209 A1 describes a method and device for forming groove lines in sheet-like members such as a carcass ply. The device comprises a roller head with a pair of rolling rollers opposed to each other. The upper rolling roller thereof is used as an embossing roller which has an embossing surface for giving an unvulcanized rubber sheet a predetermined sectional shape. In particular, the embossing roller can comprise annular protrusions for forming grooves in the unvulcanized rubber sheet with the same V-shaped pattern as the protrusions.

EP 0 928 702 A1 describes a method for manufacturing a pneumatic tire according to the preamble of claim 1.

### Summary of the Invention

It is an object of the present invention to provide a method for manufacturing a pneumatic tire, by which the air trapped between the applied tire components can be effectively discharged, and the formation of problematic air pockets is prevented.

The problem is solved by claim 1.

A particular embodiment of the invention is defined in claim 2.

According to the present invention, a pneumatic tire comprises a carcass ply extending between bead portions through a tread portion and sidewall portions. The carcass ply is formed by arranging unvulcanized strip pieces around a surface of a toroidal core which surface has a horseshoe-shaped profile, whereby the carcass ply is made up of a plurality of circumferentially arranged strip pieces. The strip pieces are each made of rubberized parallel cords extending between the bead portions through the tread portion and sidewall portions. The unvulcanized strip pieces are each provided on at least one side thereof with a plurality of vent grooves having a depth of 0.1 to 2.0 mm and a width of 0.1 to 3.0 mm.

Therefore, during building the green tire, air trapped between the applied tire components, especially between the carcass ply and the adjacent tire components, e.g. the sidewall rubber, innerliner rubber and the like can be effectively removed by the vent grooves. As a result, the problem of air pockets in the finished tire can be avoided.

### Brief Description of the Drawings

Fig.1 is a cross sectional view of a pneumatic tire according to the present invention.
Fig.2 is a cross sectional view of the bead portion thereof.
Fig.3 is a perspective view of the carcass ply thereof which is made up of a large number of circumferentially-arranged horseshoe-shaped strip pieces.
Fig.4(A) is a partial side view of the carcass ply shown in Fig.3.
Fig.4(B) is a partial side view of another example of the carcass ply of which strip pieces are overlapped differently from that shown in Fig.3 and Fig.4(A).
Fig.5 is a cross sectional view of a toroidal core used to build the green tire.
Fig.6 is a schematic cross sectional view of the toroidal core to which an innerliner rubber is applied.
Fig.7 is a partial schematic cross sectional view of the toroidal core to which further tire bead components are applied.
Fig.8 is a diagram for explaining the method of making the carcass ply.
Fig.9 is a cross sectional view of the toroidal core on which all of the tire components are disposed and the building of the green tire is finished.
Fig.10 is a perspective view of the strip piece in its unvulcanized state.
Fig.11 is an enlarged partial cross sectional view of the unvulcanized strip piece, showing vent grooves.
Fig.12 is a diagram for explaining a method and device for forming the vent grooves.
Fig.13 is a cross sectional view of another example of the strip piece in which the carcass cords are shifted towards one side.
Figs.14(A), 14(B) and 14(C) are cross sectional views for explaining the process by which the vent grooves are formed on both sides of the strip piece.
Figs.15(A) and 15(B) are schematic cross section views for explaining a conventional tire manufacturing method using a cylindrical tire building drum.
Fig.16 is a perspective view for explaining a tire manufacturing method using a toroidal core.

### Description of the Preferred Embodiments

Embodiments of the present invention will now be described in detail in conjunction with the accompanying drawings.

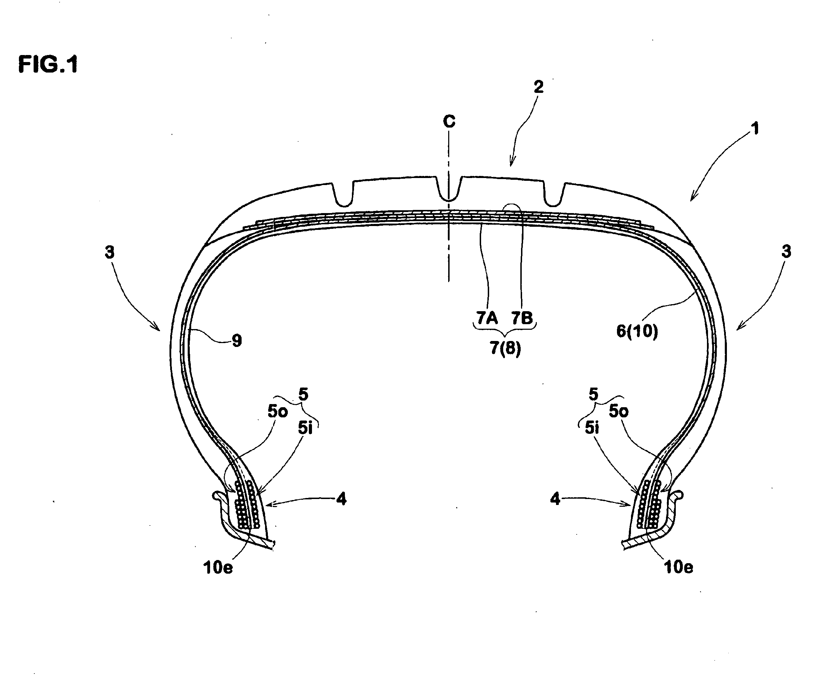

According to the present invention, a pneumatic tire 1 comprises a tread portion 2, a pair of sidewall portions 3, a pair of bead portions 4, a carcass 6 extending between the bead portions 4, and a tread reinforcing belt 8 disposed radially outside the carcass in the tread portion as shown in Fig.1.

In the following description, various dimensions, positions and the like refer to those under a normally inflated unloaded condition of the tire unless otherwise noted.

The normally inflated unloaded condition is such that the tire is mounted on a standard wheel rim and inflate to a standard pressure but loaded with no tire load.
The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load Capacity" in ETRTO, the maximum value given in the above-mentioned table in TRA or the like.
In case of passenger car tires, however, the standard pressure and standard tire load are uniformly defined by 180 kPa and 88 % of the maximum tire load, respectively.

In this embodiment, the tire 1 is a radial tire for passenger cars.

The belt 8 comprises a breaker 7 and optionally a band (not shown).

The breaker 7 comprises at least two cross plies 7A and 7B of high modulus cords laid at an angle of from 15 to 40 degrees with respect to the tire equator C. For the breaker cords, steel cords and/or high modulus organic fiber cords such as polyethylene naphtarete(PEN), polyethylene terephthalate(PET) and aromatic polyamide can be used. The breaker extends across the almost entire width of the tread portion 2. In this example, the breaker consists of the two cross breaker plies 7A and 7B.

The band is composed of a cord or cords wound on the radially outside of the breaker 7 at a small angle of at most about 5 degrees for example almost zero degree with respect to the tire equator C. The band can be a single full width band covering the overall width of the breaker 7. However, a so called edge band made up of two parts covering the edge portions of the breaker only can be used alone or in combination with the full width band.

The carcass 6 comprises a radial ply 10 of cords arranged radially at an angle in the range of from 75 to 90 degrees with respect to the tire equator C, and extending between the bead portions 4 through the tread portion 2 and sidewall portions 3. For the carcass cords, various cords can be used, but in this embodiment, organic fiber cords (e.g. nylon, polyester, rayon, aromatic polyamide, polyethylene-2,6-naphthalate and the like) are preferred. In this embodiment, the carcass 6 is composed of a single radial ply 10, but not always limited thereto. The carcass 6 may be composed of plural plies 10.

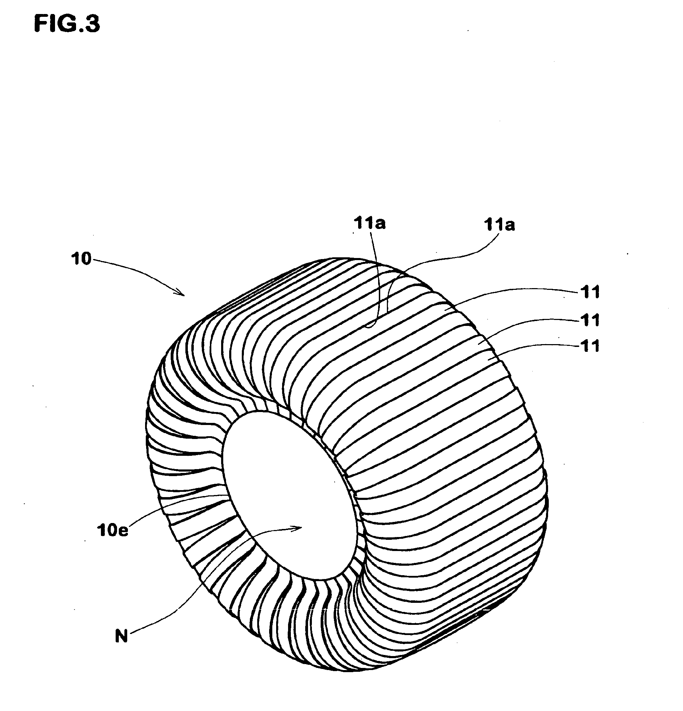

The carcass ply 10 is made up of a large number of strip pieces 11 as shown in Fig.3. Each of the strip pieces 11 is a strip of rubberized parallel cords 15 which cords have a predetermined length and are laid side by side at a constant positive cord spacing. The strip pieces 11 are arranged circumferentially of the tire, and each of the strip pieces 11 extends from one of the bead portions to the other.

The width Ly of each of the strip pieces 11 is constant along the length thereof, and preferably, the width Ly is set in a range of from 10 to 60 mm.

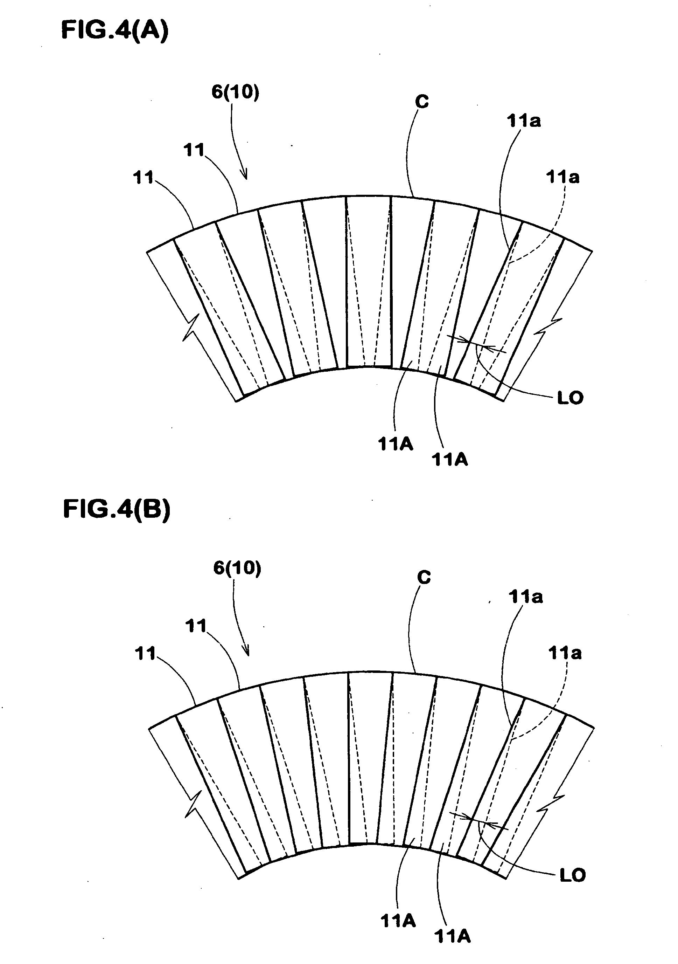

In this embodiment, all of the strip pieces 11 have the same width Ly substantially equal to an aliquot of the circumference of the carcass ply 10 measured at the tire equator c. Thus, when the strip pieces 11 are circumferentially arranged, as shown in Fig.4, the edges 11a of the strip pieces 11 are butt jointed at least at the tire equator C and in the vicinity thereof. In this embodiment, the strip pieces 11 are butt jointed over the almost entire width of the crown portion of the carcass ply 10.

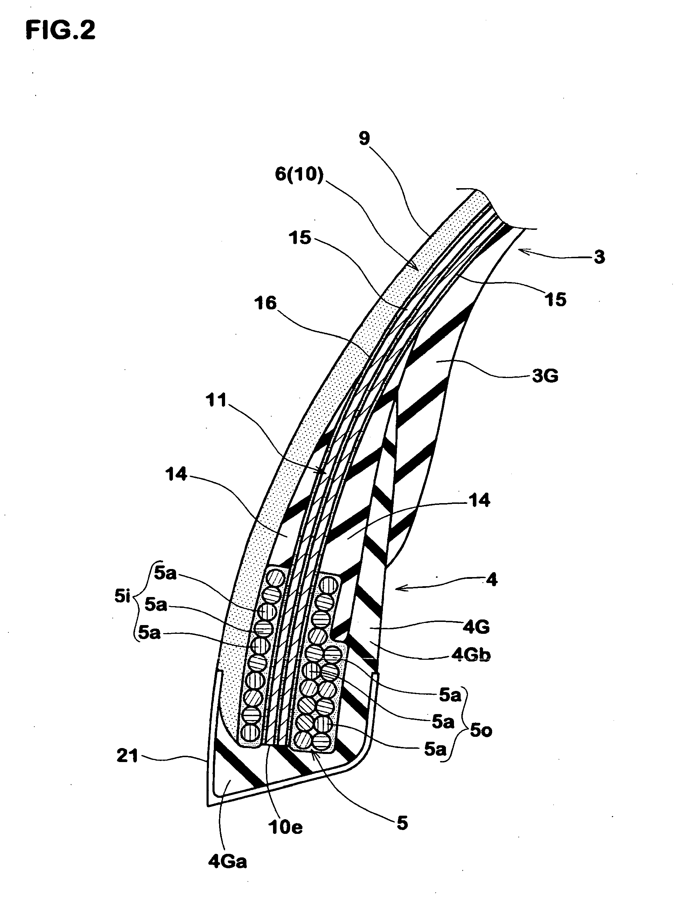

The strip pieces 11 are laid down from the tread portion to the sidewall portions and bead portions, therefore, in the sidewall portions 3 and bead portions 4, the edges 11a are overlapped.
As shown in Fig.2, the ends 10e of the strip pieces 11 are positioned in the respective bead portions 4 near the bead base, without being turned up around the bead cores 5 as in the conventional carcass structure. Accordingly, the circumferential width Lo of the overlapped portion 11A of the adjacent strip pieces 11 is gradually increased from the radially outside to the radially inside of the tire. As a result, the density of the carcass cords 15 is increased in the bead portions 4, whereby the bending rigidity of the bead portions can be increased to improve the steering stability.

The overlapped portion 11A has a substantially triangular shape when viewed sideways as shown in Figs.4(A) and 4(B).

In the example of the carcass ply 10 shown in Figs.3 and 4(A), the overlap of the strip pieces 11 is such that the strip pieces 11 are positioned alternately on the axially outside and inside of the tire.
In another example shown in Fig.4(B), the overlap is such that the edges 11a on the same side are always on the axially outside, and the edges 11a on the other side are always on the axially inside.

As shown in Fig.2, the bead core 5 in this embodiment is made up of an axially inner part 5i and an axially outer part 5o. The axially inner part 5i is disposed on the axially inner surface of the strip pieces 11, and the axially outer part 50 is disposed on the axially outer surface of the strip pieces 11 so as to secure the ends 10e between these parts 5i and 5o.

The axially inner and outer parts 5i and 5o are each formed by closely winding a rubberized high modulus wire 5a plural times. For example, a steel wire can be used.
Preferably, the number of windings of the wire 5a in the axially outer part 5o is larger than that in the axially inner part 5i so that the axially outer part 5o becomes more rigid than the axially inner part. For example, the total sectional area of the windings of the wire 5a in the axially outer part 50 is set in a range of from 1.2 to 2.0 times that in the axially inner part 5i. Here, the total sectional area of the windings of the wire 5a is the cross sectional area of the wire 5a multiplied by the number of the windings.
Thereby, the bending rigidity of the bead portions 4 is effectively increased, and the steering stability during cornering and the like can be improved.

In this embodiment, the radially inner end of the axially inner part 5i, the radially inner end of the axially outer part 5o, and the radially inner end 10e of the carcass ply 10 are positioned at substantially same radial heights as shown in Fig.2.
Further, the radially outer end of the axially inner part 5i and the radially outer end of the axially outer part 50 are positioned at substantially same radial heights.
In the axially outer part 50, to increase the number of windings as explained above, a radially inner portion is double layered in the tire axial direction, and the remaining radially outer portion is single layered to provide a gradual rigidity change.

on the radially outside of each of the inner and outer parts 5i and 5o, there is disposed a radially outwardly tapering bead apex 14 made of a hard rubber having a hardness of 80 to 100.

In this specification, the hardness of rubber means the JIS-A hardness measured with a type-A durometer according to Japanese Industrial standard K6253.

Each bead apex 14 extends radially outwardly from the bead core, while abutting on the carcass ply. Therefore, the steering stability can be further improved. Further, the carcass ply is firmly secured to the bead portions.

In the bead portion 4, a chafer rubber 21 made of a hard rubber is disposed along the axially outer surface, bottom surface and axially inner surface of the bead portion so as to form the surface layer which contacts with the rim when the tire is mounted thereon.

Further, a clinch rubber 4G made of a hard rubber is disposed so as to extend from the bead toe to the bead heel and then radially outwardly beyond the bead core 5o.
This axially outer part 4Gb extends along the axially outside of the axially outer bead apex 14 and ends at a position radially inside the radially outer end of the axially outer bead apex 14.

Furthermore, on the outside of the carcass 6, a tread rubber 2G and sidewall rubber 3G are disposed, and an innerliner 9 made of an air-impermeable rubber is disposed along the inside of the carcass 6.
As shown in Fig.2, the sidewall rubber 3G extends radially inwardly, along the outside of the carcass ply 10, to the axially outside of the axially outer part 4Gb of the clinch rubber 4G, to be spliced therewith.

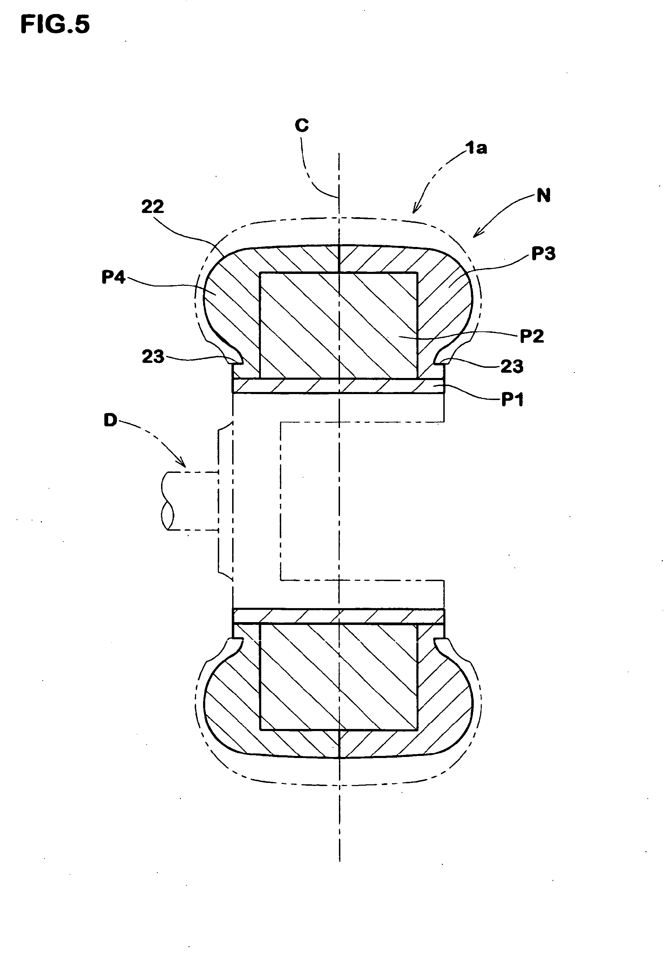

The above-mentioned pneumatic tire 1 is manufactured by vulcanizing a green tire in a vulcanizing mold as usual. But, the green tire is formed in an unconventional way using a toroidal core N as shown in Fig.5.

The toroidal core N has a main surface 22 having a horseshoe-shaped profile and a pair of flange surfaces 23 having a linear profile. The horseshoe-shaped profile is substantially same as that of the inner surface of the green tire put in the tire vulcanizing mold. Incidentally, this profile approximates to the profile of the inner surface of the finished tire at 5% inflation. The "tire at 5% inflation" means that the tire is once inflated to the standard pressure, and then the tire pressure is reduced to 5% of the standard pressure.
The flange surfaces 23 extend axially outward from the edges of the main surface 22.

In this embodiment, the toroidal core N is a split core circumferentially divided into plural pieces P1 to P4 so that the pieces P1 to P4 can be disassembled and took out from the green tire 1a in a specific order.

The toroidal core N is rotatably supported by a cantilever shaft D so that the toroidal core N can be put in the tire vulcanizing mold together with the green tire,
in this case, the toroidal core N is made of a metal material, e.g. duralumin and the like, endurable with the vulcanizing heat as well as pressure.
However, in the case that the toroidal core N is took out from the green tire before vulcanizing the green tire, the toroidal core N can be made of a plastic material, e.g. chemical wood and the like.

Aside from the split type core N, another type for example: a bladder which is filled with a fluid and capable of expanding and contracting by changing the fluid pressure; a drum which is capable of expanding and contracting by a mechanical mechanism; or the like may be used as far as the main surface 22 is rigid enough not to be deformed substantially during building the green tire.

In the following description of the manufacturing method, for the sake of simplicity, the same terms as used in the foregoing description of the vulcanized tire 1 to refer to the various tire components, are used, but unless otherwise noted, the terms refer to those in raw states or unvulcanized states.

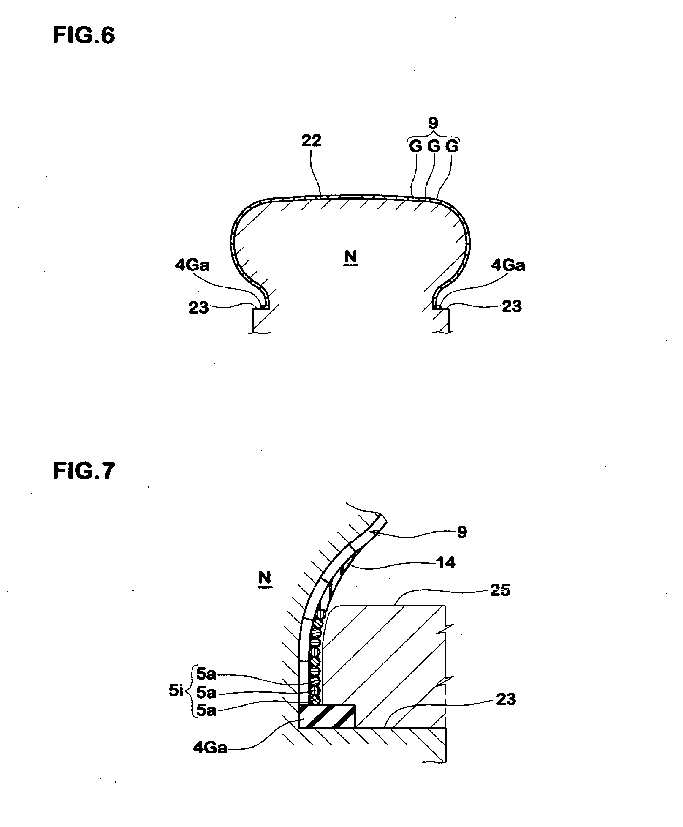

First, as shown in Fig.6 and Fig.7, the base portion 4Ga of the clinch rubber 4G is formed on the flange surface 23 by winding its strip into a ring, wherein the strip in this example has a substantially rectangular cross sectional shape.

The innerliner 9 is formed on the main surface 22 of the toroidal core N by spirally winding an unvulcanized rubber tape G around the rotational axis of the toroidal core N from the bead to bead without forming a gap between the edges of the adjacent windings.

Further, the axially inner part 5i of the bead core 5 is formed on the axially outside of the innerliner 9 by spirally winding a rubberized single wire 5a from the above-mentioned base portion 4Ga toward the radially outside one by one.

At the time of winding the wire 5a, in order to facilitate the winding, a guide ring 25 is attached to the flange surface 23 so that a small gap almost same as the thickness of the wire 5a is formed between the outer surface of the innerliner 9 and the inner surface of the guide ring 25.

Then, the axially inner bead apex 14 is applied to the axially outside of the innerliner 9 to be located on the radially outside of the axially inner part 5i. Thus, the wire 5a can be prevented from being unwound.

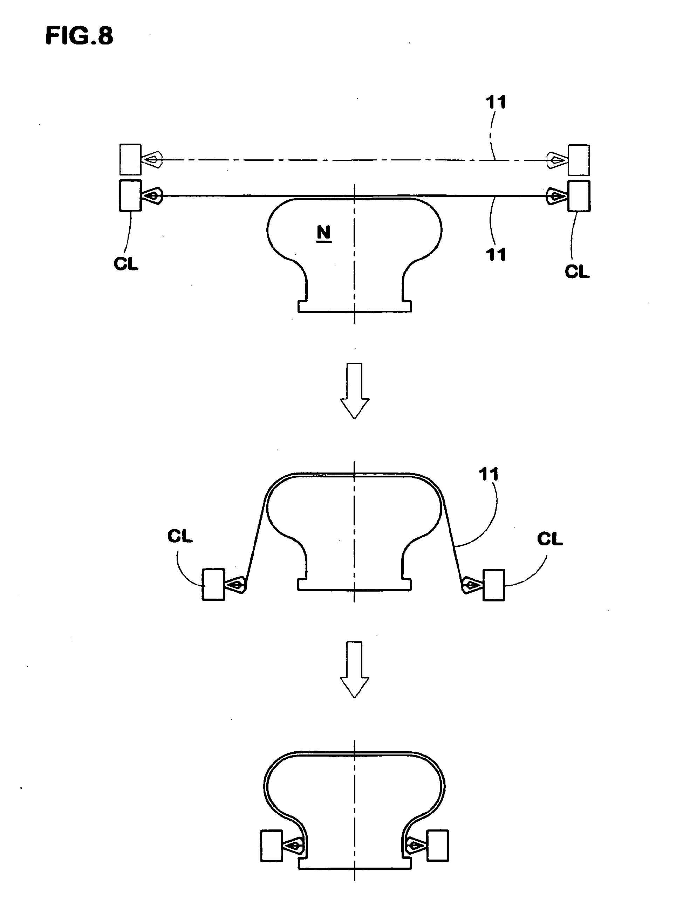

On the innerliner 9, axially inner bead apex 14 and axially inner part 5i, the above-mentioned carcass ply 10 is formed.
As shown in Fig.8 (for the sake of simplicity, the tire components other than the strip piece 11 are omitted), the strip pieces 11 are applied (indirectly) to the main surface 22 one by one, while rotating the core N steppedly.
More specifically, the both ends of the strip piece 11 are clipped so that the strip piece 11 becomes parallel to the rotational axis of the toroidal core N. The strip piece 11 is approached to the toroidal core N so that the central part of the strip piece 11 is adhered to the crown portion of the toroidal core N. Then, the both ends are laid down, while gradually decreasing the distance between the clipped ends or the clips CL. The distance between the clips is further decreased so that the ends of the strip piece 11 are adhered to the innerliner 9, axially inner bead apex 14 and axially inner part 5i.
Such application of the strip piece 11 is repeated until the entire circumference is covered with the applied strip pieces 11. In the case of the overlap shown in Fig.4(B), the rotating steps of the core N correspond to the width Ly of the strip piece 11. In the case of the overlap shown in Fig.4(A), the rotating steps correspond to two times the width Ly.

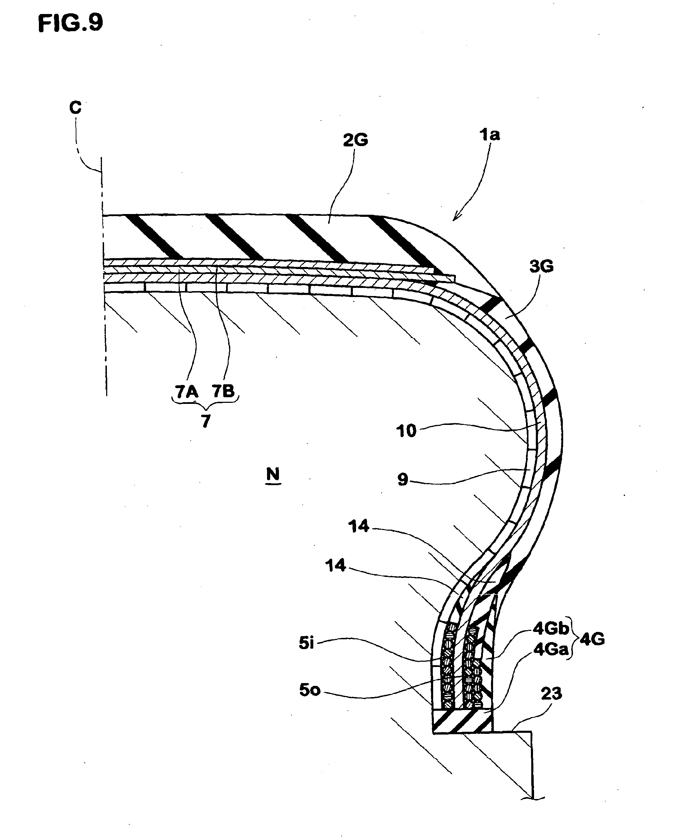

After the carcass ply 10 is formed, as shown in Fig.9, on the axially outside of each of the edge portions of the carcass ply 10, the axially outer part 5o of the bead core 5 is formed by spirally winding a rubberized single wire 5a from the base portion 4Ga of the clinch rubber 4G toward the radially outside. In this embodiment, as explained above, the number of windings is larger than that of the axially inner part 5i.
since the radial height of the axially outer part 50 is substantially same as that of the axially inner part 5i, the axially outer part 5o is wound partially double. In this example, the double layered part extends from the radially inner end of the axially outer part 50 to the middle height thereof.

on the radially outside of the axially outer part 50, the axially outer bead apex 14 is applied.

On the axially outside of the axially outer bead apex 14 and the axially outer part 5o, the axially outer part 4Gb of the clinch rubber 4G is applied so as to continue from the above-mentioned base portion 4Ga.

Further, the sidewall rubber 3G, breaker 7, tread rubber 2G are disposed around the toroidal core N and thus the green tire 1a is formed.
Incidentally, a relatively wide rubber component such as sidewall rubber 3G and tread rubber 2G can be formed by spirally winding an unvulcanized rubber tape similarly to the innerliner 9. But, it is also possible to use a conventional full-width strip extruded.

The green tire 1a is put in the mold and vulcanized. Thus, pneumatic tire 1 is produced.

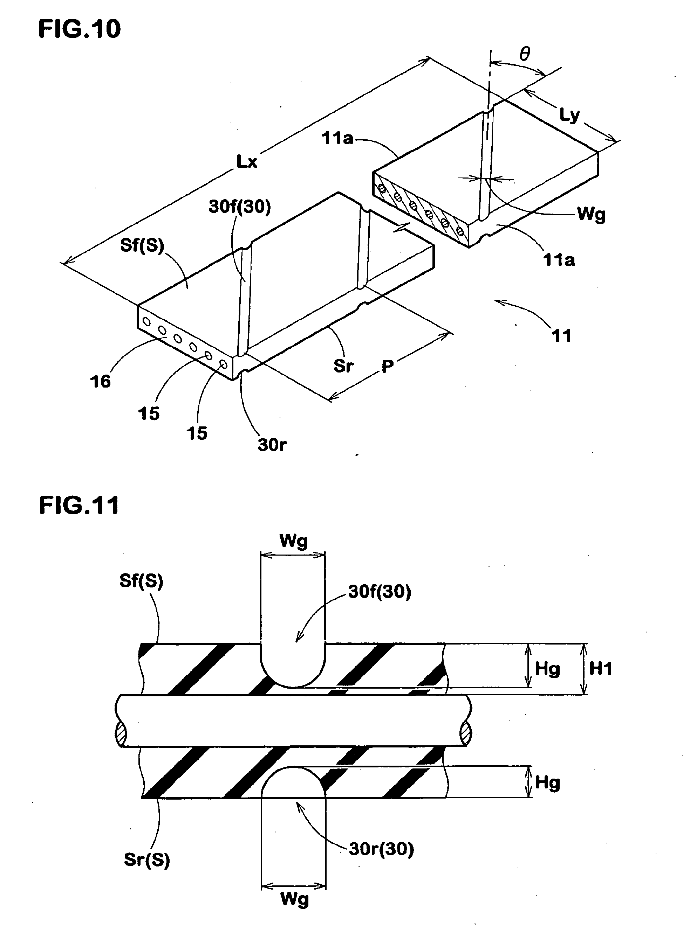

As shown in Figs.10 and 11, the above-mentioned strip piece 11 has a rectangular shape, and a plurality of carcass cords 15 are embedded in the topping rubber 16 so as to extend along the entire length Lx of the strip piece 11 and so as to be laid parallel with each other at constant cord spacings over the entire width Ly of the strip piece 11.

At least one side s(Sf, Sr) of the strip piece 11 is provided with vent grooves 30 extending from one of the edges 11a to the other. In this embodiment, both sides Sf and Sr are provided with the vent grooves 30f and 30r, and the vent grooves 30f on one side Sf are formed at the substantially same positions as the vent grooves 30r on the other side sr.

The vent grooves 30 have a depth Hg and a width wg as shown in Fig.11. If the depth Hg is less than 0.1 mm and/or the width wg is less than 0.1 mm, air can not be fully discharged. If the depth Hg is more than 2.0 mm and/or the width wg is more than 3.0 mm, since the groove volume is large, the flowage of rubber during vulcanizing the tire becomes inadequate, and as a result, the groove tends to remain in the finished tire as an internal strain. Therefore, the width wg is set in a range of not less than 0.1 mm, preferably not less than 0.2 mm, but not more than 3.0 mm, preferably not more than 2.0 mm. The depth Hg is set in a range of not less than 0.1 mm, but not more than 2.0 mm, preferably not more than 0.8 mm.
Of course, the depth Hg is less than the thickness H1 of the topping rubber 16 covering the carcass cords 15. Preferably, the depth Hg is not more than 80% of the thickness H1.

If the vent grooves 30 is inclined at a very small angle with respect to the longitudinal direction of the strip piece 11, the length of the vent groove becomes increased, and there is a tendency that air is remained in the vent groove without being discharged. Therefore, the inclination angle theta of the vent grooves 30 is not less than 20 degrees, preferably not less than 30 degrees with respect to the longitudinal direction. The angle theta can be 90 degrees, but preferably less than 90 degrees, more preferably not more than 70 degrees.
By inclining the vent grooves 30 as above, the range in the longitudinal direction capable of discharging air by one vent groove is increased. And the effect of the vent grooves 30 is enhanced. Therefore, the number of the vent grooves 30 can be decreased if desired.

As to the vent grooves 30 disposed on each side (Sf or Sr) of the strip piece 11, their intervals P in the longitudinal direction of the strip piece 11 are set to be not less than 20 mm, preferably not less than 30 mm. If less than 20 mm, since the grooves 30 are formed too many, there is a tendency that air is remained in the vent grooves than discharged. As to the upper limit, on the other hand, the intervals P are not more than 500 mm, preferably not more than 200 mm. This upper limit is however not so critical because of the following reason. If the adjacent grooves 30 are overlapped or almost overlapped in the longitudinal direction of the strip piece 11 due to their inclination angles theta, air trapped in any place can be easily discharged through the nearest vent groove. Therefore, when the intervals P are relatively large, it is desirable to incline the vent grooves so that the ends of the adjacent vent grooves are overlapped in the longitudinal direction.

The strip piece 11 is formed from a long continuous strip 31 of rubberized parallel carcass cords 15. The strip 31 can be made by the use a rubberizing machine of a calender roller type or an extruder type. In the case of the calender roller type, the parallel carcass cords 15 are sandwiched between sheets of the topping rubber 16 and then the assembly is passed through a gap between the calender rollers. In the case of the extruder type, the parallel carcass cords 15 are draw out from the outlet of the extruder together with the extruded topping rubber. This material strip 31 can be formed as a strip having the same width as the strip piece 11 or a strip wider than the strip piece 11.
As explained above, the vent grooves are formed on at least one side of the strip 31. In the case of the wider material strip 31, there are two options:
1) the strip 31 is cut into the same width as strip piece 11 and then the vent grooves are formed thereon;
2) the vent grooves are formed on the wide strip 31 and then the grooved wide strip 31 is cut into the same width as the strip piece 11.

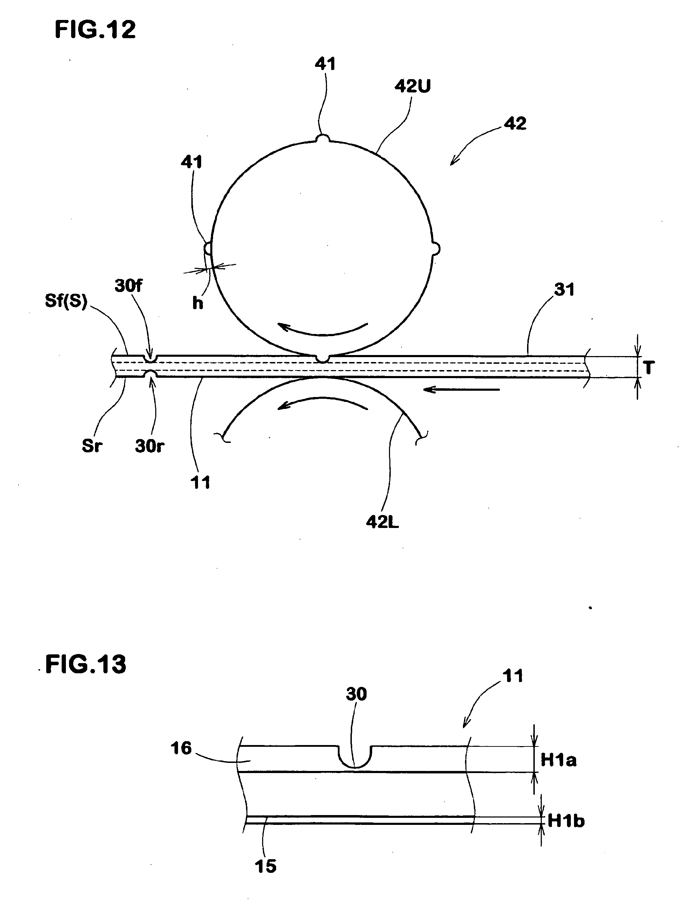

In this embodiment, the vent grooves are formed by the use of a grooving device 42 as shown in Fig.12.

The grooving device 42 comprises a supporting roller 42L having a smooth periphery, and a grooving roller 42U having a periphery provided with one or more grooving ribs 41. The grooving rib 41 is inclined corresponding to the angle theta of the vent groove. The grooving roller 42U and supporting roller 42L are arranged parallel each other, leaving a gap therebetween. The gap is substantially same as the thickness T of the strip piece 11 or strip 31.
Therefore, by inserting the strip 31 between the grooving roller 42u and supporting roller 42L which are rotating in sync, the grooving ribs 41 are pressed onto the surface s of the strip 31, while passing through the gap between the rollers 42U and 42L. Accordingly, at least the surface S is provided with the vent grooves 30 having the depth almost corresponding to the protruding height h of the grooving rib 41.

Incidentally, as shown in Fig.13, in the case that the topping rubber thickness H1a on one side of the carcass cords 15 is largely different from the topping rubber thickness H1b on the other side of the carcass cords 15, the vent grooves 30 can be formed on only one side having the larger thickness H1a.

In this embodiment, however, the vent grooves 30 are formed on both sides of the strip 31. For that purpose, the protruding height h of the grooving rib 41 is set to be more than the depth Hg of the vent groove 30 and yet more than two times the depth Hg (namely, the sum total of the depth Hg of the vent groove 30f and the depth Hg of the vent groove 30r).

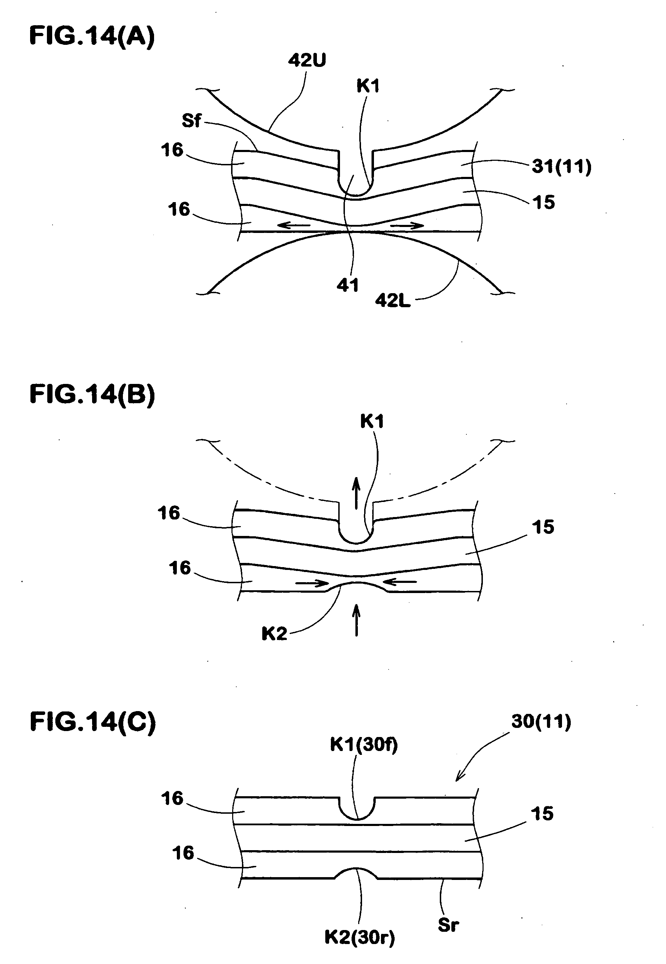

As a result, as shown in Fig.14(A), the grooving rib 41 which penetrates into the topping rubber 16, pushes down the carcass cords 15, while compressing and pushing aside the underneath topping rubber 16.

Then, as shown in Fig.14(B), as the grooving rib 41 is getting away from the strip 31, the strip makes to return to the original state due to the resilience of rubber and the elasticity of the cords. But, the rubber can not fully follow to such return motion. As a result, a dent K2 is formed on the opposite side of the dent K1 directly caused by the rib.

Finally, as shown in Fig.14(C), the dents K1 and K2 are remained as the vent grooves 30f and 30r.

As a result, although the supporting roller 42L is smooth, both sides sf and sr of the strip 31 are simultaneously provided with vent grooves 30f and 30r at the same position in the longitudinal direction.

### Comparison tests

Radial tires of size 235/45ZR17 for passenger cars were manufactured, using strip pieces shown in Table 1.
All of the tires had the same structure shown in Figs.1-4, except for the strip pieces.

with respect to each tire, one hundred samples were manufactured and visually checked for the occurrence of deformation or defect due to air pockets.
The number of samples in which deformation was occurred was indicated in Table 1.

**Table 1**

| Tire | Ref.1 | Ref.2 | Ref.3 | Ex.1 | Ex.2 | Ex.3 | Ex.4 | Ex.5 | Ex.6 | Ex.7 | Ex.8 | Ex.9 |
|---|---|---|---|---|---|---|---|---|---|---|---|---|
| Strip piece | | | | | | | | | | | | |
| method *1 | Cal | Cal | Ext | Ext | Cal | Cal | Ext | Ext | Ext | Ext | Ext | Ext |
| thickness (mm) | 0.8 | 1.2 | 1.2 | 1.2 | 0.8 | 1.2 | 1.2 | 1.2 | 1.2 | 1.2 | 1.2 | 1.2 |
| Vent grooves | | | | | | | | | | | | |
| position *2 | - | - | - | one | one | one | one | one | one | one | one | both |
| angle theta (deg) | - | - | - | 90 | 90 | 90 | 45 | 45 | 45 | 45 | 45 | 45 |
| width Wg (mm) | - | - | - | 1 | 1 | 1 | 1 | 1 | 3 | 0.5 | 1 | 1 |
| depth Hg (mm) | - | - | - | 0.7 | 0.1 | 0.1 | 0.1 | 0.5 | 0.1 | 0.1 | 0.1 | 0.1 |
| intervals P (mm) | - | - | - | 100 | 100 | 100 | 100 | 100 | 100 | 100 | 500 | 500 |
| Test result | 24 | 15 | 16 | 2 | 3 | 1 | 0 | 0 | 1 | 2 | 3 | 1 |

| | | | | | | | | | | | | |
|---|---|---|---|---|---|---|---|---|---|---|---|---|
| 1) Manufacturing method CAL: The strip piece was formed by the use of the calender type rubberizing machine. EXT: The strip piece was formed by the use of the extruder type rubberizing machine. 2) Whether the vent grooves were formed on one side or both side one: one side both; both sides | | | | | | | | | | | | |

## Claims

1. A method for manufacturing a pneumatic tire (1),
said pneumatic tire (1) comprising
a tread portion (2),
a pair of sidewall portions (3),
a pair of bead portions (4), and
a carcass ply (10) extending between the bead portions (4) through the tread portion (2) and sidewall portions (3), wherein said carcass ply (10) is made up of a plurality of circumferentially arranged strip pieces (11), and each said strip piece (11) is made of rubberized parallel cords (15) extending between the bead portions (4) through the tread portion (2) and sidewall portions (3), said method comprising steps of:
preparing the unvulcanized strip pieces (11),
building the green tire by utilizing the unvulcanized strip pieces (11),
wherein the step of building the green tire comprises
forming said carcass ply (10) by arranging the unvulcanized strip pieces (11) around a surface of a toroidal core (N); and
vulcanizing the green tire in a mold,
**characterized in**
**that** the step of preparing the unvulcanized strip pieces (11) comprises forming a plurality of vent grooves (30) in each unvulcanised strip piece (11) by passing the unvulcanized strip piece (11) between a grooving roller (42U) having a periphery provided with grooving ribs (41) and a supporting roller (42L) having a smooth periphery,
**that** the vent grooves (30) have a depth (Hg) of 0.1 to 2.0 mm and a width (Wg) of 0.1 to 3.0 mm,
**that** the gap between the two rollers (42U, 42L) is substantially same as the thickness (T) of the unvulcanized strip piece (11), and
**that** the protruding height (h) of the grooving ribs (41) is more than two times the depth (Hg) of the vent grooves,
whereby the vent grooves (30) are formed on both sides of the unvulcanized strip piece (11) at the same time such that the vent grooves (30f) on one side are formed at the same positions as the vent grooves (30r) on the other side.

2. The method according to claim 1, wherein
the vent grooves (30) extend from one of the edges to the other of the unvulcanised strip piece (11) at an angle in a range of from 20 to 90 degrees with respect to the longitudinal direction of the strip piece.

## Patentansprüche

1. Verfahren zum Herstellen eines Luftreifens (1), wobei der Luftreifen (1) umfasst
einen Laufflächenabschnitt (2),
ein Paar Seitenwandabschnitte (3),
ein Paar Wulstabschnitte (4) und
eine Karkasslage (10), die sich zwischen den Wulstabschnitten (4) durch den Laufflächenabschnitt (2) und Seitenwandabschnitte (3) erstreckt, wobei die Karkasslage (10) aus einer Vielzahl von in Umfangsrichtung angeordneten Streifenstücken (11) hergestellt ist, und ein jedes Streifenstück (11) aus gummierten parallelen Korden (15) hergestellt ist, die sich zwischen den Wulstabschnitten (4) durch den Laufflächenabschnitt (2) und die Seitenwandabschnitte (3) erstrecken,
wobei das Verfahren die Schritte umfasst:
Vorbereiten der unvulkanisierten Streifenstücke (11),
Aufbauen des Rohreifens unter Verwendung der unvulkanisierten Streifenstücke (11),
wobei der Schritt des Aufbauens des Rohreifens umfasst
Bilden der Karkasslage (10) durch Anordnen der unvulkanisierten Streifenstücke (11) um eine Fläche eines torusförmigen Kerns (N) herum; und
Vulkanisieren des Rohreifens in einer Form,
**dadurch gekennzeichnet , dass**
der Schritt des Vorbereitens der unvulkanisierten Streifenstücke (11) das Bilden einer Vielzahl von Entlüftungsrillen (30) in jedem unvulkanisierten Streifenstück (11) durch Hindurchführen des unvulkanisierten Streifenstücks (11) zwischen einer Rillenbildungswalze (42U), die einen mit Rillenbildungsrippen (41) versehenen Umfang aufweist, und einer Stützwalze (42L), die einen glatten Umfang aufweist, umfasst,
dass die Entlüftungsrillen (30) eine Tiefe (Hg) von 0,1 bis 2,0 mm und eine Breite (Wg) von 0,1 bis 3,0 mm aufweisen,
dass der Spalt zwischen den zwei Walzen (42U, 42L) im Wesentlichen gleich der Dicke (T) des unvulkanisierten Streifenstücks (11) ist, und
dass die Vorsprungshöhe (h) der Rillenbildungsrippen (41) größer als das Zweifache der Tiefe (Hg) der Entlüftungsrillen ist,
wobei die Entlüftungsrillen (30) auf beiden Seiten des unvulkanisierten Streifenstücks (11) gleichzeitig gebildet werden, sodass die Entlüftungsrillen (30f) auf einer Seite an den gleichen Positionen wie die Entlüftungsrillen (30r) auf der anderen Seite gebildet werden.

2. Verfahren nach Anspruch 1,
wobei die Entlüftungsrillen (30) sich von einem der Ränder zu dem anderen des unvulkanisierten Streifenstücks (11) unter einem Winkel in einem Bereich von 20 bis 90 Grad mit Bezug auf die Längsrichtung des Streifenstücks erstrecken.

## Revendications

1. Procédé de fabrication d'un bandage pneumatique (1),
ledit bandage pneumatique (1) comprenant
une portion formant bande de roulement (2),
une paire de portions formant parois latérales (3),
une paire de portions de talon (4), et
une nappe de carcasse (10) s'étendant entre les portions de talon (4) en traversant la portion formant bande de roulement (2) et les portions formant parois latérales (3), ladite nappe de carcasse (10) étant constituée d'une pluralité de pièces en ruban (11) agencées circonférentiellement, et chacune desdites pièces en ruban (11) est constituée de câblés parallèles caoutchoutés (15) s'étendant entre les portions de talon (4) en traversant la portion formant bande de roulement (2) et les portions formant parois latérales (3), ledit procédé comprenant les étapes consistant à :
préparer les pièces en ruban (11) non vulcanisées,
constituer le pneumatique vert en utilisant les pièces en ruban (11) non vulcanisées,
dans lequel l'étape de constitution du pneumatique vert comprend la formation de ladite nappe de carcasse (10) en agençant les pièces en ruban (11) non vulcanisées autour d'une surface d'un noyau toroïdal (N) ; et
vulcaniser le pneumatique vert dans un moule,
**caractérisé en ce que**
l'étape de préparation des pièces en ruban (11) non vulcanisées comprend de former une pluralité de rainures d'évent (30) dans chaque pièce en ruban (11) non vulcanisée en faisant passer la pièce en ruban (11) non vulcanisée entre un cylindre de rainurage (42U) ayant une périphérie dotée de nervures de rainurage (41) et un cylindre de support (42L) ayant une périphérie lisse,
les rainures d'évent (30) ont une profondeur (Hg) de 0,1 à 2,0 mm et une largeur (Wg) de 0,1 à 3,0 mm,
l'intervalle entre les deux cylindres (42U, 42L) est sensiblement le même que l'épaisseur (T) de la pièce en ruban (11) non vulcanisée, et la hauteur de projection (h) des nervures de rainurage (41) est supérieure à deux fois la profondeur (Hg) des rainures d'évent,
grâce à quoi les rainures d'évent (30) sont formées sur les deux côtés de la pièce en ruban (11) non vulcanisée au même moment où les rainures d'évent (30f) sur un côté sont formées aux mêmes positions que les rainures d'évent (30r) sur l'autre côté.

2. Procédé selon la revendication 1, dans lequel
les rainures d'évent (30) s'étendent depuis l'une des bordures jusqu'à l'autre de la pièce en ruban (11) non vulcanisée sous un angle dans une plage de 20 à 90° par rapport à la direction longitudinale de la pièce en ruban.
